# EUROPEAN PATENT APPLICATION

(11) **EP 2 479 757 A1**
(43) Date of publication of application: **25.07.2012**
(21) Application number: 11155466.3
(22) Date of filing: 22.02.2011
(51) Int. Cl.: G11B 33/04, B42F 5/00, B65B 25/00

(54) **A book with a CD pocket**

(30) Priority: 20.01.2011 PL 39368711
(71) Applicant: Takt Sp. z o.o., 32-329 Boleslaw (PL)
(72) Inventor: Kwiatkowski, Krzysztof, 02-789 Warszawa (PL); Miadzel, Stanislaw, 32-300 Olkusz (PL); Zajac, Adam, 32 332 Bukowno (PL)
(74) Representative: Korga, Leokadia

(57) **Abstract**

The invention relates to a book with a CD pocket especially for printed materials with individual or multi CD, DVD and BD pockets attached. The book with a CD pocket according to the invention is characteristic in that the pocket (1) is formed from a single template (2) in the shape of three adjacent quadrilaterals (3), (4) and (5) whose height is at least equal to the diameter of the disc and which, after folding along the parallel edges, form a pocket (1), with a back panel (3), a front panel (4) and a side panel (5) connecting the pocket (1) with the book (7), where at the front panel (4) there are two side wings (6) and (6') formed, bent inwards and glued to the back panel (3) at the edges perpendicular to the spine of the book (7), and the pocket (1) is cut together with the stack of inner pages of the book (7) and after cutting is open at the edges parallel to the spine of the book (7).

## Description

The present invention relates to a book with a CD pocket especially for printed materials with individual or multi CD, DVD and BD pockets attached.

European patent EP 0952582 describes a CD packaging integrated with a book. The packaging comprises stacked sheets joined at one edge with a CD pocket for compact discs. The invention is characterized in that said pocket has, on the side that lies opposite to the open edge of the pocket, a central opening, the distance between said open edge and said opposite side being smaller than the diameter of the compact disc. The disc protrudes from the central opening. Additionally, the edges of the pocket are glued on the semicircular edges.

American patent US 6.360.887 describes a CD folder in the form of a booklet which has a multi-page brochure held between two opposing cover panels. The front panel of the cover includes a pocket placed opposite the part containing the brochure. The pocket includes two opposing flaps by which it is attached to the front panel. One of the flaps has a notch that permits it to lie flat on the front panel thus eliminating bulging when the folder is closed. A second pocket may be formed in the cover part. This pocket can accommodate even a thick brochure.

Polish application description no. P-391055 describes a CD packaging with a brochure comprising a disc pocket joined at one edge with the brochure, which according to the invention is characteristic in that the pocket is formed from a single template in the shape of three adjacent quadrilaterals whose height is equal to at least the diameter of the disc and in which, after folding, one quadrilateral forms the back panel, the second quadrilateral forms the front panel whereas the third quadrilateral forms the panel joining the pocket with the brochure, wherein there are two side wings formed at the front panel, bent inwards and glued to the back panel.

The aim of the invention is to design a book with a CD pocket, wherein the disc pocket is made from a single template, closed on the two sides of the edges perpendicular to the spine of the book and open at the edges parallel to the spine of the book, where the depth of the pocket is no smaller than the diameter of the disc and the maximum height of the book with the pocket is 127 mm.

The book with a CD pocket comprising a cover and a stack of inner pages and a pocket for a CD disc placed on the inside of the cover according to the invention is characteristic in that the pocket is formed from a single template in the shape of three adjacent quadrilaterals, whose height is equal to at least the diameter of the disc and which, after folding along the parallel edges, form a pocket with a front panel, a back panel and a side panel which joins the pocket with the book, with two side wings formed at the front panel, bent inwards and glued to the back panel at the edges perpendicular to the spine of the book, wherein the pocket is cut together with the stack of inner pages of the book and, after cutting, is open at the edges parallel to the spine of the book.

Favorably, the folding edges of the quadrilaterals forming the pocket are scored. Favorably, the side panel of the pocket is glued to the front panel of another pocket thus creating a multiplicity of joined CD pockets in a book.

Favorably, the front panel has a window.

Favorably, the pocket is glued in between the pages of the book.

Favorably, the maximum height of the book is 127 mm.

The main advantage of the solution according to the invention is making the pocket from a single template folded along the parallel edges of three quadrilaterals. This feature is extremely important in the production process as making the pocket from a single template and using two lines of gluing running along the template permits simultaneous gluing and folding in marked places. As a result an extremely important feature of the disc pocket is obtained, absent from other known solutions to date, mainly the closing of it at the top and bottom edges i.e. the edges perpendicular to the spine of the book and opening it at the side edges i.e. parallel to the spine of the book.

There are no incisions on any edges perpendicular to the spine of the book. Extracting the CD disc is in the direction of opening the book.

The pocket is cut together with the whole stack of inner pages which ensures even edges at each side of the book and it is only during the cutting process that the pocket is opened on its left side, parallel to the spine of the book.

The pocket template is economical and saves material as compared to other known solutions of this kind.

It is of paramount importance that the height of the book with the CD pocket does not exceed 127 mm. As shoplifting is so common, special anti-theft safety cases, the so-called "jewel boxes", are used to protect the popular disc cases. The said dimensions of the book will make it possible to use such anti-theft cases to protect the books with CD pockets from theft.

The book may be a folder or a brochure or a stack of blank sheets of paper. The CD pockets may be inserted in any number also in between joined pages of the book.

The book may have covers of any hardness, made of paper or cardboard. The window makes it easier to extract the CD disc and to identify its content. Books with a CD pocket made according to the invention can be manufactured on typical bookbinding machines.

The subject of the invention in one embodiment is presented in the drawing in which:

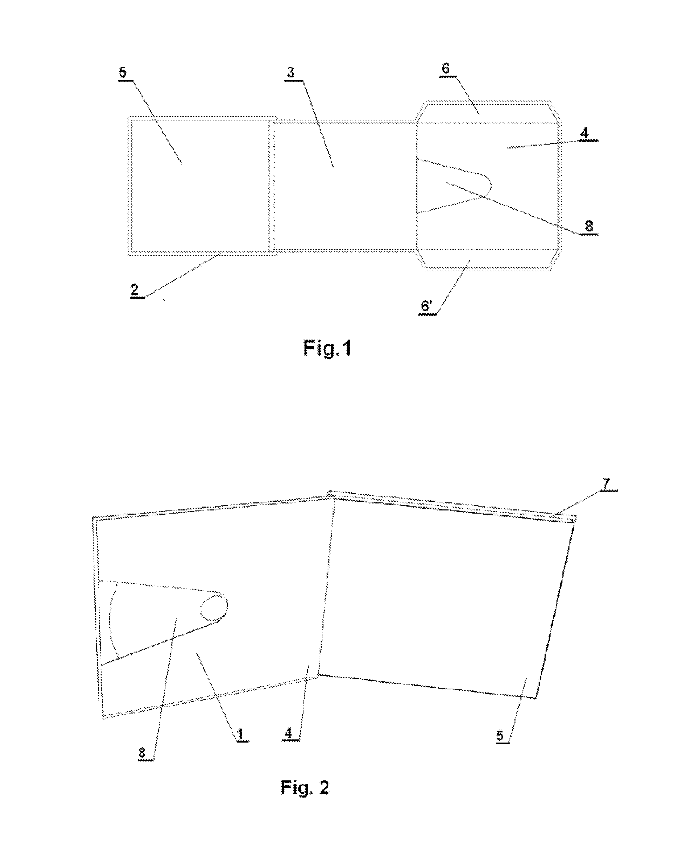

fig. 1 - presents the view of the template;
fig. 2- presents the view of the book.

### Embodiment I.

A book 7 with a CD pocket comprising a cover and a stack of inner pages contains one pocket 1 formed from a single template 2. The template 2 is in the shape of three adjacent quadrilaterals, whose height is equal to the diameter of the disc, and of which, after folding along their parallel edges, quadrilateral 3 forms the back panel of the pocket, quadrilateral 4 forms the front panel of the pocket 1, whereas quadrilateral 5 forms the side panel joining the pocket 1 with the book 7. At the front panel 4 there are two side wings 6 and 6' formed, bent inwards and glued to the back panel 3 at the edges perpendicular to the spine of the book 7. The pocket 1 is cut together with the stack of inner pages of the book 7 and after cutting is open at the outer edge parallel to the spine of the book 7. The folding edges of the quadrilaterals forming the pocket 1 are scored. In the front panel 4 there is a window 8. The height of the book 7 is 127 mm.

### Embodiment 2

In other embodiments the side panel 5 of the pocket 1 is glued to the front panel 4 of another pocket 1 thus creating a multiplicity of joined CD pockets in a book 7. In another embodiment the pocket 1 may be glued in anywhere in between the pages of the book 7.

## Claims

1. A book with a CD pocket, comprising a cover and a stack of inner pages as well as a CD pocket placed on the inner side of the cover, characteristic in that, the pocket (1) is formed from a single template (2), in the shape of three adjacent quadrilaterals (3), (4) and (5) whose height is equal to at least the diameter of the disc, and which, after folding along the parallel edges, form a pocket (1), with a back panel (3), a front panel (4) and a side panel (5) connecting the pocket (1) with the book (7), and where at the front panel (4) there are two side wings (6) and (6') formed, bent inwards and glued to the back panel (3), at the edges perpendicular to the spine of the book (7), and the pocket (1) is cut together with the stack of inner pages of the book (7) and, after cutting, is open at the edges parallel to the spine of the book (7).

2. A book according to claim 1, characteristic in that the folding edges of the quadrilaterals (1) are scored.

3. A book according to claim 1, characteristic in that the side panel (5) of the pocket (1) is glued to the front panel (4) of another pocket (1') thus forming a multiplicity of joined CD pockets in the book.

4. A book according to claims 1 and 2, characteristic in that, the front panel (4) has a window (8).

5. A book according to claims 1 to 4, characteristic in that, the pocket (1') is glued in between the pages of the book (7).

6. A book according to claims 1 to 5, characteristic in that, the maximum height of the book (7) is 127 mm.
